# EUROPÄISCHE PATENTSCHRIFT

(11) **EP 0 794 020 B1**
(45) Veröffentlichungstag und Bekanntmachung des Hinweises auf die Patenterteilung: **30.08.2000**
(21) Anmeldenummer: 97103687.6
(22) Anmeldetag: 06.03.1997
(51) Int. Cl.: B09B 3/00

(54) **Vorrichtung zum Entleeren von geschlossenen Behältern, insbesondere Kraftstoffiltern**
Device for emptying closed containers, in particular fuel filters
Dispositif pour vider des conteneurs fermés, en particulier des filtres à carburant

(30) Priorität: 09.03.1996 DE 19609165
(43) Veröffentlichungstag der Anmeldung: 10.09.1997
(73) Patentinhaber: Weisshaar, Angelika, 78052 Villingen-Schwenningen (DE)
(72) Erfinder:
(74) Vertreter: Neymeyer, Franz, Dipl.-Ing. (FH)

(56) Entgegenhaltungen:
- DE-A- 3 911 420
- DE-C- 327 073
- DE-C- 4 329 258
- DE-U- 9 311 482

## Beschreibung

Die Erfindung betrifft eine Vorrichtung zum Entleeren von geschlossenen unter Druck stehenden Behältern, insbesondere von Kraftstoffiltern, welche am Behälter festsitzend und abnehmbar befestigbar ist und die einen Ablaßkanal mit einer Ablaßöffnung aufweist, in welchem eine Bohrvorrichtung zum Durchbohren der Behälterwand angeordnet ist, welche mittels eines Spindeltriebes betätigbar ist, wobei der Ablaßkanal an der Behälterwand zumindest während des Entleerens dichtend zur Anlage bringbar ist.

In modernen Kraftfahrzeugen werden üblicherweise Benzinfilter zyklisch alle 30.000 bis 60.000 km oder auch bei Störungen im Kraftstoffversorgungssystem gewechselt. Dies bedeutet, daß im Hinblick auf die große Zahl der zugelassenen Kraftfahrzeuge insgesamt ein sehr häufiger Kraftstoffilterwechsel stattfindet. Wird das Kraftfahrzeug abgeschaltet, so ist der Kraftstoff im Kraftstoffilter noch mit einem Überdruck beaufschlagt. Dies bedeutet, daß beim einfachen Abziehen der Kraftstoffleitung vom Kraftstoffilter Kraftstoff in die Atmosphäre austritt. Infolge der häufigen Kraftstoffilterwechsel und des zum Teil großen Fassungsvermögens gelangen hierdurch riesige Kraftstoffmengen in die Atmosphäre. Zum Vermeiden dieser Umweltbelastungen ist eine Vorrichtung bekannt, mit welcher Kraftstoff aus dem sonst geschlossenen Gehäuse des Kraftstoffilters abgelassen werden kann, ohne daß der Kraftstoff in die Atmosphäre austritt (DE-PS 43 29 258 C1).

Diese bekannte Vorrichtung zum Entleeren eines Behälters, insbesondere eines Kraftstoffilters von Kraftfahrzeugen weist eine Haltevorrichtung auf, welche im wesentlichen aus einer kreisscheibenförmigen Grundplatte besteht. Die Grundplatte ist mittels eines halbringförmig gebogenen Haltebandes am Kraftstoffilter befestigbar. Zum Spannen des den Kraftstoffilter im montierten Zustand zumindest teilweise umschließenden Haltebandes ist ein bügelartiger Spannhebel vorgesehen, welcher über ein längeneinstellbares Spannglied am Halteband einhängbar ist, so daß die Spannlänge des Haltebandes an verschiedene Durchmesser von Kraftstoffiltern anpaßbar ist.

An der gegenüber dem Halteband liegenden Seite der Grundplatte ist ein mit einem Außengewinde versehenes Ablaßrohr mittig befestigt. Durch das Ablaßrohr und durch die Grundplatte hindurch erstreckt sich ein Ablaßkanal, dessen Mündung behälterseitig von einer Ringdichtung umgeben ist, über welche der Ablaßkanal an der Behälterwand dichtend anliegt.

Auf das Ablaßrohr ist ein Ablaßbehälter über ein entsprechendes Schraubgewinde aufschraubbar, der ein Bohrwerkzeug in Form eines Spiralbohrers aufweist. Der Spiralbohrer durchläuft den Ablaßbehälter bis zu dessen dem Schraubgewinde gegenüberliegenden Behälterboden und ist dort festsitzend befestigt. Der Spiralbohrer überragt den Ablaßbehälter in axialer Richtung zum Behälter hin, so daß beim Aufschrauben des Ablaßbehälters auf den Ablaßkanal der Spiralbohrer die Wandung des Kraftstoffilters durchbohrt und eine Auslaßöffnung in der Wandung des Kraftstoffilters entsteht. Die aus dem Kraftstoffilter durch die Auslaßöffnung herauslaufende Flüssigkeit gelangt über den Auslaßkanal direkt in den Ablaßbehälter, ohne in die Atmosphäre zu gelangen.

Nachdem ein Teil der Flüssigkeit aus dem Kraftstoffilter abgelaufen ist, wird der Flüssigkeitsdruck im Kraftstoffilter abgebaut, so daß der Kraftstoff nur noch sehr langsam in den Ablaßbehälter abfließt, wobei durch die vorgesehenen Dichtungselemente zwischen der Grundplatte und dem Kraftstoffilter die bekannte Ablaßvorrichtung und der Kraftstoffilter ein nach außen hermetisch abgeschlossenes System bilden. Dies hat zur Folge, daß sich beim weiteren Abfließen der Flüssigkeit aus dem Kraftstsoffilter in diesem ein Unterdruck ausbildet, so daß nach einer gewissen Ausflußmenge keine weitere Flüssigkeit mehr in den Ablaßbehälter gelangt. Um den Krafststoffilter vollständig entleeren zu können, muß zum Abbau des Unterdrukkes in dessen Wandung eine Belüftungsöffnung angebracht werden. Zur Herstellung dieser Belüftungsöffnung ist eine Art Zange vorgesehen. Es handelt sich dabei um eine Zange nach Art einer üblichen Rohrzange, deren Greifbacken zum Umgreifen des Kraftstoffilters ausgebildet sind. Eine der Greifbacken ist mit einem radial nach innen weisenden Stechdorn versehen, der oben am Kraftstoffilter ansetzbar ist. Beim Zusammenpressen der Zange wird der Stechdorn in die Außenwandung des Kraftstoffilters gedrückt, so daß die gewünschte Belüftungsbohrung entsteht. Nachteilig an dieser Art der Anbringung einer Belüftungsöffnung in der Wandung des Kraftstoffilters ist, daß die Zange bei eingebautem Krafststoffilter auf Grund der häufig äußerst beengten Platzverhältnisse im Bereich des Kraftstoffilters nur schwer oder gar nicht einsetzbar ist. Desweiteren ist die Zange selbst auch nur schwer zu handhaben, da zum Erzeugen der Belüftungsöffnung insbesondere bei Kraftstsoffiltern mit Stahlgehäusen hohe Betätigungskräfte notwendig sind, um die Wandung durchstoßen zu können.

Demgemäß liegt der Erfindung die Aufgabe zugrunde, eine Vorrichtung der gattungsgemäßen Art zur Verfügung zu stellen, mit welcher es möglich ist, unter Druck stehende Behälter zu entleeren, ohne daß Flüssigkeit an die Atmosphäre treten kann und mit der es gleichzeitig möglich ist, in die Behälterwandung bei auftretendem Unterdruck zum Abbau dieses Unterdruckes eine Belüftungsbohrung anzubringen.

Die Aufgabe wird erfindungsgemäß dadurch gelöst, daß der Ablaßkanal mit seiner Bohrvorrichtung am Ende eines ersten Gabelarmes angeordnet ist, welcher an einem Führungsrohr befestigt ist, in welchem ein Telekoprohr axial verschiebbar geführt ist,
daß am Ende des Telekoprohres ein zweiter Gabelarm vorgesehen ist, welcher mit dem ersten Gabelarm, dem Teleskoprohr und dem Führungsrohr in einer gemeinsamen Ebene liegt und an dessen Ende eine Belüftungsvorrichtung mit einem Stechdorn vorgesehen ist, und
daß der Stechdorn durch Verringern des Abstandes des ersten Gabelarmes zum zweiten Gabelarm die Wandung des zwischen dem Stechdorn und der Bohrvorrichtung bzw. dem Ablaßkanal klemmend gehaltenen Behälters durchstößt.

Mit der erfindungsgemäßen Vorrichtung wird eine Vorrichtung zur Verfügung gestellt, mit welcher ein Kraftstoffbehälter, insbesondere Kraftstoffilter von Kraftfahrzeugen in einfacher Weise vollständig entleerbar ist. Dazu weist die erfindungsgemäße Vorrichtung einen Ablaßkanal mit einer Bohrvorrichtung auf, welche am Ende eines Gabelarmes angeordnet ist. Dieser Gabelarm ist an einem Führungsrohr befestigt, in welchem ein Teleskoprohr axial verschiebbar geführt ist. Am äußeren Ende des Teleskoprohres ist ein zweiter Gabelarm angeordnet, welcher in einer gemeinsamen Ebene mit dem ersten Gabelarm der Bohrvorrichtung bzw. des Ablaßkanales verläuft. Das freie Ende dieses zweiten Gabelarmes weist eine Belüftungseinrichtung mit einem Stechdorn auf, welcher durch axiales Verschieben des Teleskoprohres im Führungsrohr auf die Bohrvorrichtung zubewegbar ist, wobei der Stechdorn koaxial zum Ablaßkanal verlaufend angeordnet ist. Durch diese Axialverstellung des Teleskoprohres im Führungsrohr ist desweiteren auch der Abstand zwischen der Bohrvorrichtung und dem Stechdorn einstellbar, so daß Kraftstoffilter mit unterschiedlichem Durchmesser zwischen der Bohrvorrichtung bzw. dem Ablaßkanal und dem Stechdorn in der erfindungsgemäßen Vorrichtung klemmend aufnehmbar sind.

Zum Entleeren eines Kraftstoffilters, wird zunächst der Abstand zwischen dem Stechdorn und der Bohrvorrichtung bzw. dem Ablaßkanal auf den Durchmesser des Kraftstoffilters eingestellt, so daß die erfindungsgemäße Vorrichtung mit ihrem Stechdorn auf der Zylindermantelfläche der Wandung des Kraftstoffilters oberseitig aufsetzbar ist. Der Ablaßkanal mit seiner Bohrvorrichtung ist dabei dem Steckdorn diametral gegenüberliegend an der Wandung des Kraftstoffilters angeordnet und wird durch eine Axialverschiebung des Teleskoprohres im Führungsrohr auf die Wandung zubewegt, bis der Kraftstoffilter klemmend zwischen dem Stechdorn und der Bohrvorrichtung bzw. dem Ablaßkanal gehalten ist. Das Teleskoprohr und das Führungsrohr sind in diesem Zustand seitlich neben dem Kraftstoffilter angeordnet.

Der Ablaßkanal liegt dabei mittels einer aufgesetzten Dichtung dichtend an der Wandung des Kraftstoffilters an. Durch betätigen der Bohrvorrichtung wird nun in die Wandung des Kraftstoffilters eine Ablaufbohrung eingebracht, so daß der im Kraftstoffilter befindliche Kraftstoff aus dem Kraftstoffilter in den Ablaßkanal abfließen kann. Nachdem eine gewisse Menge an Kraftstoff aus dem Kraftstoffilter herausgeflossen ist, bildet sich in diesem ein Unterdruck aus, so daß kein weiterer Kraftstoff mehr in den Ablaßkanal gelangt. Nun wird der Stechdorn durch weitere Verringerung des Abstandes zwischen dem Stechdorn und dem Ablaßkanal bzw. der Bohrvorrichtung, indem das Teleskoprohr in Führungsrohr axial verschoben wird, durch die Wandung des Kraftstoffilters gedrückt, so daß in dieser eine Belüftungsöffnung entsteht. Durch diese Belüftungsöffnung kann nun Umgebungsluft in den Kraftstoffilter nachströmen, so daß der Unterdruck im Kraftstoffilter abgebaut wird und der restliche Kraftstoff in den Ablaßkanal abfließen kann.

Durch die erfindungsgemäße Ausgestaltung gemäß Anspruch 2 ist sichergestellt, daß während der Betätigung der Bohrvorrichtung der Spiralbohrer zunächst die Wandung des Kraftstoffilters durchbohrt, ohne daß der Stechdorn die Wandung des Kraftstoffilters durchstößt.

Durch die erfindungsgemäße Ausgestaltung gemäß Anspruch 3 ist die erfindungsgemäße Vorrichtung für Kraftstoffilter oder auch andere zu entleerende Behälter unterschiedlicher Durchmesser einsetzbar. Durch den geringen Vorschub des Spiralbohrers pro Umdrehung durch die Bohrspindel werden die axialen Voschubkräfte des Spiralbohrers äußerst gering gehalten, so daß sichergestellt ist, daß nicht während des Bohrvorganges und somit solange der Behälter bzw. Kraftstoffilter noch unter einem Überdruck steht der Stechdorn versehentlich durch die Wandung des Behälters hindurchdrückt.

Durch die rohrartige Ausbildung des Stechdornes gemäß Anspruch 4 ist sichergestellt, daß die Umgebungsluft durch den Stechdorn hindurch in den Kraftstoffilter gelangt, ohne daß der Stechdorn zum Belüften des Kraftstoffbehälters aus der vom Stechdorn hergestellten Belüftungsöffnung wieder zumindest teilweise herausgezogen werden muß.

Durch die bei in der Wandung des Kraftstoffilters eingestochenen Stechdorn innerhalb des Kraftstoffilters angeordnete Radialbohrung des Stechdorns gemäß Anspruch 5 ist eine sichere Belüftung des Kraftstoffilters auch dann gewährleistet, wenn beim Einstechen durch die Wandung des Kraftstoffilters der vom Stechdorn teilweise laschenartig nach innen gedrückte Wandabschnitt der Wandung die zentrale koaxial im Stechdorn verlaufende Belüftungsbohrung des Stechdornes an dessen Ende verschließt.

Durch die Ausgestaltungen gemäß der Ansprüche 6 und 7 ist sichergestellt, daß keinerlei Kraftstoff beim Entleeren des Kraftstoffilters in die Atmosphäre gelangen kann. Dabei wird durch das gemäß Anspruch 7 vorgesehene Tastventil sicher verhindert, daß versehentlich Kraftstoff über den Stechdorn und die mit diesem verbundenen Belüftungsbohrungen in die Atmosphäre gelangen kann. Insbesondere durch die den Stechdorn umhüllende Schlauchdichtung ist sichergestellt, daß auch dann keinerlei Kraftstoff an die Umgebung austreten kann, wenn der Stechdorn durch die Wandung des Kraftstoffilters zum Anbringen der Belüftungsbohrung hindurchgedrückt wird, bevor der Überdruck im Kraftstoffilter abgebaut ist. Die Schlauchdichtung ist in ihrer Länge dabei vorzugsweise so ausgebildet, daß eine ausreichende Dichtwirkung bereits vorliegt, wenn der Stechdorn an der Behälterwandung mit seiner Spitze anliegt, oder zumindest im Moment des Durchbruches des Stechdornes durch die Wandung des Kraftstoffilters. Dies ermöglicht insbesondere auch, den Stechdorn vor dem Druckabbau im Kraftstoffilter zum Anbringen der Belüftungsbohrung durch die Wandung des Kraftstoffilters hindurchzudrücken und erst danach die Ablaufbohrung durch die Bohrvorrichtung anzubringen. Es versteht sich, daß die Schlauchdichtung in entsprechender Weise elastisch verformbar ausgebildet ist und beim Anbringen der Belüftungsbohrung entsprechend in axialer Richtung zusammendrückbar ist.

Durch die Ausgestaltung gemäß Anspruch 8 sind auch größere Mengen an Flüssigkeit bzw. Kraftstoff aus einem größeren Kraftstoffilter ablaßbar, welche über die Schlauchleitung sicher in den vorgesehenen Flüssigkeitsbehälter ableitbar sind, ohne daß sie in die Atmosphäre gelangen.

Durch den Führungsbund der Bohrspindel mit ihrer O-Ringdichtung gemäß Anspruch 9 ist sichergestellt, daß aus dem Auslaßkanal, aus welchem die Bohrspindel zur Betätigung herausragt, keinerlei Flüssigkeit austreten kann.

Durch die Verbindung der Belüftungsvorrichtung mit der Schlauchleitung des Ablaßkanals der Bohrvorrichtung oder direkt mit dem Flüssigkeitsauffangbehälter gemäß Anspruch 10 wird eine variable Bedienbarkeit der erfindungsgemäßen Vorrichtung erreicht. So kann durch diese Ausgestaltung die Belüftungsbohrung wahlweise vor oder nach dem Anbringen der Ablaufbohrung durch die Bohrvorrichtung angebracht werden. Insbesondere bei Anbringen der Belüftungsbohrung vor der Ablaufbohrung kann der im Kraftstoffbehälter vorhandene Überdruck direkt über die Belüftungsvorrichtung und deren flexibler Rohrleitung entweder über die Schlauchleitung oder direkt in den Flüssigkeitsauffangbehälter abgebaut werden. Damit wird eine Vereinfachung der Bedienung der erfindungsgemäßen Vorrichtung erreicht. Nach dem Abbau dieses Überdruckes kann der Kraftstoff bis zum Aufbau eines Unterdruckes aus dem Kraftstoffilter durch die angebrachte Ablaufbohrung auslaufen. Zum Abbau des entstehenden Unterdruckes im Kraftstoffilter wird das in der flexiblen Rohleitung der Belüftungsvorrichtung vorgesehene Belüftungsventil geöffnet, so daß über diese Rohrleitung und die Belüftungsvorrichtung mit ihrem Stechdorn Umgebungsluft in den Kraftstoffilter nachstömen kann und der restliche Kraftstoff drucklos in den Flüssigkeitsauffangbehälter abläuft. Das Belüftungsventil kann dabei aus einem Tastventil oder einem Schraubventil gebildet sein, wobei es durch eine entsprechende Anordnung in der flexiblen Rohleitung leicht zugänglich ist.

Im folgenden wird anhand der Zeichnung die Erfindung näher erläutert. Es zeigt:
- Fig. 1: eine Vorrichtung der erfindungsgemäßen Art im Schnitt;
- Fig. 2: einen vergrößerten Ausschnitt II aus Fig. 1;
- Fig. 3: einen vergrößerten Ausschnitt III aus Fig. 1.
- Fig. 4: ein zweites Ausführungsbeipiel der erfindungsgemäßen Vorrichtung;
- Fig. 5: eine Teilansicht V aus Fig. 4.

Die erfindungsgemäße Vorrichtung 1 weist einen oberen Gabelarm 2 auf, welcher am oberen Ende eines Teleskoprohres 3 befestigt ist. An seinem freien, dem Teleskoprohr 3 gegenüberliegenden Ende 4 weist der Gabelarm 2 eine Belüftungseinrichtung 5 auf, die mit einem Belüftungsventil 6 und einem Stechdorn 7 versehen ist.

Das Teleskoprohr 3 ist in einem Führungsrohr 8 axial verschiebbar geführt und in seiner axialen Lage mittels eines Spindeltriebes 9 im Führungsrohr 8 verstellbar angeordnet. Das Führungsrohr 8 weist einen in einer gemeinsamen Vertikalebene mit dem oberen Gabelarm 2 liegenden unteren Gabelarm 10 auf, an dessen freien Ende ein Ablaßkanal 11 mit einer integrierten Bohrvorrichtung 12 angeordnet ist. Der Ablaßkanal ist von einem parallel zum Führungsrohr 8 verlaufenden Ablaßrohr 13 gebildet, in welchem die Bohrvorrichtung 12 angeordnet ist. Die Bohrvorrichtung 12 besteht aus einem Spiralbohrer 14, welcher drehfest in einer Bohrspindel 15 gelagert ist. Die Bohrspindel 15 ist über ein entsprechendes Einschraubgewinde 16 im Ablaßrohr 13 axial verstellbar eingeschraubt, so daß bei Betätigung der Bohrspindel 15 der Spiralbohrer 14 axial im Ablaßrohr 13 und somit im Ablaßkanal 11 verstellbar ist. An ihrem unteren Ende weist die Bohrspindel 15 einen Schlüsselkopf 17 auf, welcher mittels eines Kerbstiftes 18 auf der Bohrspindel 15 festsitzend montiert ist. Der Schlüsselkopf 17 weist zur Betätigung der Bohrspindel 15 an seinem unteren freien Ende ein entsprechendes Schlüsselprofil in Form eines Sechskantes 19 auf. An seinem oberen, im Ablaßrohr 13 bzw. im Ablaßkanal 11 sitzenden Ende ist die Bohrspindel 15 mit einem radial erweiterten Führungsbund 20 versehen, mittels welchem die Bohrspindel 15 annähernd spielfrei im Ablaßrohr 13 geführt ist. Im Führungsbund 20 ist eine O-Ringdichtung 21 vorgesehen, mittels welcher der Ablaßkanal 11 nach unten hin gegenüber dem Führungsbund 20 der Bohrspindel 15 abgedichtet ist. Der Spiralbohrer 14 überragt dabei die Bohrspindel 15 axial nach oben.

Am oberen Ende des Ablaßrohres 13 ist eine Führungsbuchse 22 eingeschraubt, welche gegenüber dem Ablaßrohr 13 mittels einer O-Ringdichtung 23 im montierten Zustand abgedichtet ist. Die Führungsbuchse 22 weist eine zentrale, koaxial zum Ablaßrohr 13 verlaufende Führungsbohrung 24 auf, in welche der Spiralbohrer 14 der Bohrspindel 15 hineinragt und in welcher der Spiralbohrer 14 geführt ist. Unterhalb der Führungsbuchse 22 ist ein etwa radial verlaufender Ablaßstutzen 25 dicht eingeschraubt. Der Ablaßstutzen 25 weist einen Anschlußrohrstutzen 26 auf, auf welchen ein Ablaßschlauch (in der Zeichnung nicht dargestellt) zum Ablassen von Flüssigkeit in einen entsprechenden Auffangbehälter aufsteckbar ist.

Die Führungsbuchse 22 ist mit einem koaxial zu ihrer Führungsbohrung 24 nach oben überstehenden Rohrstutzen 27 versehen, auf welchen eine diesen Rohrstutzen 27 axial nach oben überragende Rohrdichtung 28 aufgesteckt ist.

Der axiale Abstand des sich koaxial gegenüberliegenden Stechdorns 7 und der Bohrvorrichtung 12 ist mittels des Spindeltriebes 9 einstellbar. Dazu weist der Spindeltrieb 9 eine Gewindespindel 29 auf, welche über ein Axialdrucklager 30 axial unverschiebbar aber verdrehbar im Führungsrohr 8 gelagert ist. Die Gewindespindel 29 greift zur Axialverstellung in ein entsprechendes Mutterngewinde 31 des Teleskoprohres 3 ein, so daß bei Betätigung der Gewindespindel 29 das Teleskoprohr 3 im Führungsrohr 8 axial verschoben wird. Um zu verhindern, daß sich das Teleskoprohr 3 im Führungsrohr 8 bei der Betätigung der Gewindespindel 29 verdreht, ist das Teleskoprohr 3 mit einer Führungsnut 32 versehen, in welche beispielsweise ein Kerbstift 33 hineinragt, welcher am oberen Ende des Führungsrohres 8 in einer entsprechenden radialen Durchgangsbohrung 34 angeordnet ist und radial in die Führungsnut 32 hineinragt. Somit ist das Teleskoprohr 3 im Führungsrohr 8 axial verschiebbar und durch die Führungsnut 32 und den Kerbstift 33 unverdrehbar gelagert. Die Führungsnut 32 erstreckt sich dabei annähernd über die gesamte Länge des Teleskoprohres 3 und ist an seinem unteren Ende 35 offen.

Zum Betätigen der Gewindespindel 29 weist diese an ihrem unteren, aus dem Führungsrohr 8 herausragenden Ende 36 einen Betätigungshebel 37 auf, welcher den Spindelkopf 36 der Gewindespindel 29 quer durchragt und zum manuellen Betätigen der Gewindespindel 29 dient. Um größere Betätigungskräfte auf die Gewindespindel 29 ausüben zu können, ist diese an ihrem unteren Ende ihres Spindelkopfes 36 mit einem Sechskant 38 versehen, auf welchen ein entsprechendes Schlüsselwerkzeug zum Betätigen der Gewindespindel 29 aufsteckbar ist.

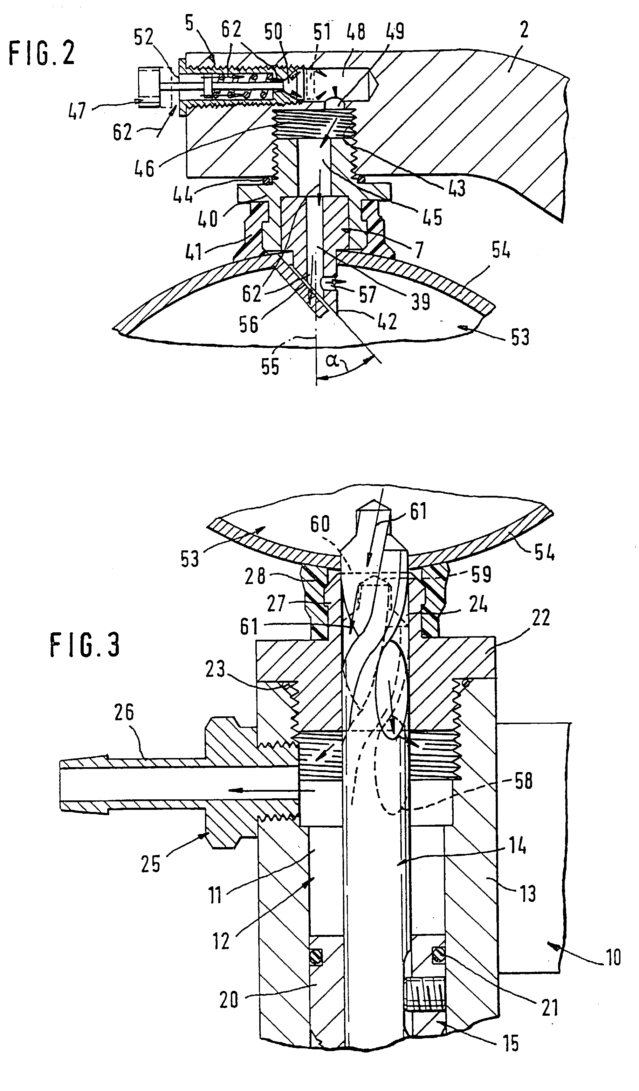

Wie aus Fig. 2 ersichtlich ist, ist der Stechdorn 7 mit einer zentralen Belüftungsbohrung 39 versehen und in einem Rohrstutzen 40 festsitzend angeordnet. Auf dem Rohrstutzen 40 ist eine Schlauchdichtung 41 vorgesehen, welche den Rohrstutzen 40 axial nach unten überragt. Die Schlauchdichtung 41 ist in ihrer Länge derart ausgebildet, daß der Stechdorn 7 diese, wie dies aus Fig. 2 ersichtlich ist, in axialer Richtung mit seiner Dornspitze 42 minimal axial überragt. Es ist allerdings auch vorstellbar, daß die Schlauchdichtung 41 länger ausgebildet ist, so daß diese stets dichtend zwischen dem Rohrstutzen und der Wandung 54 des Behälters 53 wirkt. Der Rohrstutzen 40 ist in ein entsprechendes Aufnahmegewinde 43 des oberen Gabelarmes 2 eingeschraubt und mittels einer O-Ringdichtung 44 dicht mit dem Gabelarm 2 verbunden. Der Rohrstutzen 40 weist in koaxialer Verlängerung zur Belüftungsbohrung 39 des Stechdornes 7 eine Durchgangsbohrung 45 auf, welche in einen Belüftungsraum 46 des Gabelarmes 2 mündet. Oberhalb des Belüftungsraumes 46 ist die Belüftungseinrichtung 5 angeordnet. Die Belüftungseinrichtung besteht aus einem federbelasteten Tastventil 47, welches in eine entsprechende quer zum Rohrstutzen 40 verlaufende Gewindebohrung 48 eingeschraubt ist. Die Gewindebohrung 48 steht dabei über einen Verbindungskanal 49 mit dem Belüftungsraum 46 und somit auch mit der Durchgangsbohrung 45 und dem Belüftungskanal 39 des Stechdornes 7 in Verbindung. Durch Betätigen des Tastventiles 47 bzw. durch Verschieben des Ventiltellers 50 des Tastventiles 47 in die in Fig. 2 gestrichelt dargestellte Lage 51 wird das Tastventil 47 geöffnet, so daß von der Außenseite 52 des Tastventiles 47 Umgebungsluft durch das Tastventil 47 hindurch über die Gewindebohrung 48, den Verbindungskanal 49, die Durchgangsbohrung 45, durch die Belüftungsbohrung 49 hindurchströmen kann, wie dies durch die Pfeile 62 in Fig. 2 beispielhaft angedeutet ist.

Der Stechdorn 7 dient zum Durchstechen eines zu entlüftenden Behälters 53, dessen Wandung 54 in Fig. 2 beispielhaft dargestellt ist. Der Stechdorn 7 ist dabei zum Erreichen geringer Druckkräfte unter einem Winkel α von etwa 15° bis 30° schräg zu dessen Längsmittelachse 55 scharfkantig angeschliffen. Beim Durchstechen der Wandung 54 bildet sich im Bereich des Stechdornes 7 durch den Freischnitt mittels des Stechdornes 7 eine deckelartige Lasche 56. Da sich diese Lasche insbesondere bei Aluminiumbehältern vor die Öffnung der Belüftungsbohrung 39 legen kann und diese somit durch die Lasche 56 verschlossen werden kann, ist im Stechdorn 7 eine weitere, radial verlaufende zusätzliche Radialbohrung 57 vorgesehen, welche derart angeordnet ist, daß sie nach dem Durchstechen der Wandung 54 sicher innerhalb des Behälters 53 liegt, so daß der Behälter über den Stechdorn 7 sicher belüftbar ist.

Fig. 3 zeigt die Bohrvorrichtung 12 in vergrößerter Darstellung. Der Spiralbohrer 14 ist aus seiner in Fig. 3 gestrichelt dargestellten Lage 58, in welcher er mit seiner Bohrspitze 59 unterhalb der oberen Endkante 60 des Rohrstutzens 27 liegt, durch Drehen der Bohrspindel 15 in seine in Fig. 3 dargestellte obere Endlage bringbar. Durch die Drehung und durch die Axialverschiebung des Bohrers 14 bohrt dieser sich durch die Wandung 54 des Behälters 53 hindurch, wobei durch die Schlauchdichtung 28 der Behälter 53 dicht mit dem Ablaßkanal 11 verbunden ist. Wie in Fig. 3 dargestellt ist, kann in dieser Stellung des Bohrers 14, mit welchem die Wandung 54 durchbohrt wurde, Flüssigkeit, welche sich im Behälter 53 befindet, entlang des Bohrers 14, wie durch die Pfeile 61 beispielhaft dargestellt ist, in den Ablaßkanal 11 gelangen, von wo aus sie über den Ablaßstutzen 25 und dessen Anschlußstutzen 26 über einen entsprechenden Anschlußschlauch zu einem Auffangbehälter gelangen kann.

Beim Entleeren des geschlossenen Behälters 53 bzw. des Kraftstoffilters 53 stellt sich nach Abfließen einer bestimmten Flüssigkeitsmenge bzw. Kraftstoffmenge ein Unterdruck ein, so daß keine weitere Flüssigkeit durch die Führungsbohrung 24 bzw. durch den Ablaßkanal 11 aus dem Behälter 53 herausfließen kann. Für das weitere Abfließen von Flüssigkeit aus dem Behälter 53 wird zum Belüften des Behälters 53, wie oben zu Fig. 2 beschrieben, das Tastventil 47 betätigt, so daß Luft von außen in den Behälter 53 nachströmen kann. Durch diese nachströmende Luft wird der Unterdruck im Behälter 53 abgebaut, so daß die restliche Flüssigkeit im Behälter 53 weiter über den Rohrstutzen 27, den Ablaßkanal 11 und den Ablaßstutzen 25 in einen entsprechenden Auffangbehälter strömen kann.

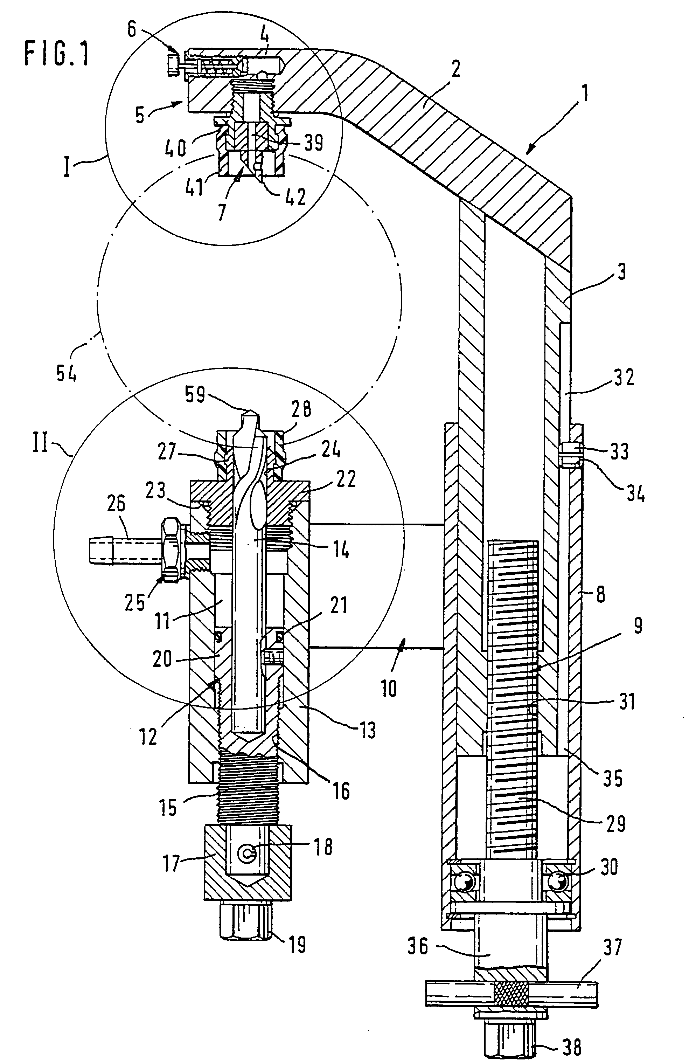

Zum Ansetzen der erfindungsgemäßen Vorrichtung 1 an einen Behälter, insbesondere einen Kraftstoffilter, wird mittels des Spindeltriebes 9 der Abstand zwischen dem oberen Ende des Rohrstutzens 27 und der Dornspitze 42 des Stechdornes 7 auf den Durchmesser des Kraftstoffbehälters passend eingestellt, so daß dieser zwischen dem Stechdorn 7 und dem Rohrstutzen 27 klemmend gehalten wird. Durch die beiden Rohrdichtungen 28 und 41 einerseits der Bohrvorrichtung 12 und andererseits des Stechdornes 7 wird eine dichtende Verbindung zwischen dem Kraftstoffilter und dem Ablaßkanal 11 einerseits und dem Stechdorn 7 andererseits hergestellt. In dieser am Kraftstoffilter fixierten Lage wird nun die Bohrspindel 15 betätigt, so daß sich der Bohrer 14 rotierend und axial in Richtung auf die Behälterwand bewegend durch die Behälterwand hindurchbohrt. Die Steigung des Gewindes der Bohrspindel 15 ist dabei so gewählt, daß bei geringem Vorschub während des Bohrvorgangs sich der Spiralbohrer 14 unter Ausübung einer äußerst geringen Vorschubkraft durch die Wandung 54 des Kraftstoffilters 53 hindurchbohrt und während dieses Bohrvorgangs sichergestellt ist, daß nicht versehentlich der Stechdorn 7 die Wandung des Kraftstoffilters durchdringt. Der Bohrer 14 kann dabei, wie dies in den Fig. 1 und 3 dargestellt ist, abgesetzt ausgebildet sein, so daß er einen zunächst kleineren Schneidendurchmesser an seinem behälterseitigem Ende aufweist, wodurch ein einfacheres Durchbohren der Kraftstoffbehälterwand erreichbar ist.

Nach dem Durchbohren der Kraftstoffilterwand fließt nun durch die Führungsbohrung 24 entlang des Bohrers 14 Kraftstoff aus dem Kraftstoffilter ab in den Ablaßkanal 11, von wo er über den Anschlußrohrstutzen 26 des Ablaßstutzens 25 in einen entsprechenden Auffangbehälter ableitbar ist. Nachdem sich, wie oben schon ausgeführt, ein gewisser Unterdruck nach Ablauf einer gewissen Menge Flüssigkeit aus dem Kraftstoffilter in diesem ausgebildet hat, wird nun zum Durchstechen der Kraftstoffilterwand mit dem Stechdorn 7 der Spindeltrieb 9 über dessen Betätigungshebel 37 oder dessen Sechskant 38 zum Verringern des Abstandes zwischen dem Rohrstutzen 27 und den Stechdorn 7 betätigt.

Durch die scharfkantige Ausbildung des Stechdornes 7 und dessen schrägen Anschliff durchdringt dieser beim weiteren Betätigen des Spindeltriebes 9 die Wandung des Kraftstoffilters, wobei durch die Schlauchdichtung 41 eine dichtende Verbindung zwischen dem Stechdorn 7 und der Behälterwand des Kraftstoffilters sichergestellt ist. Durch Betätigen der Belüftungseinrichtung 5 bzw. des Tastventiles 47 in der Belüftungseinrichtung 5 wird dem Innenraum des Kraftstoffilters von außen Luft zugeführt, so daß der Unterdruck im Kraftstoffilter abbaut, und die restliche Flüssigkeit im Kraftstoffilter sicher ablaufen kann.

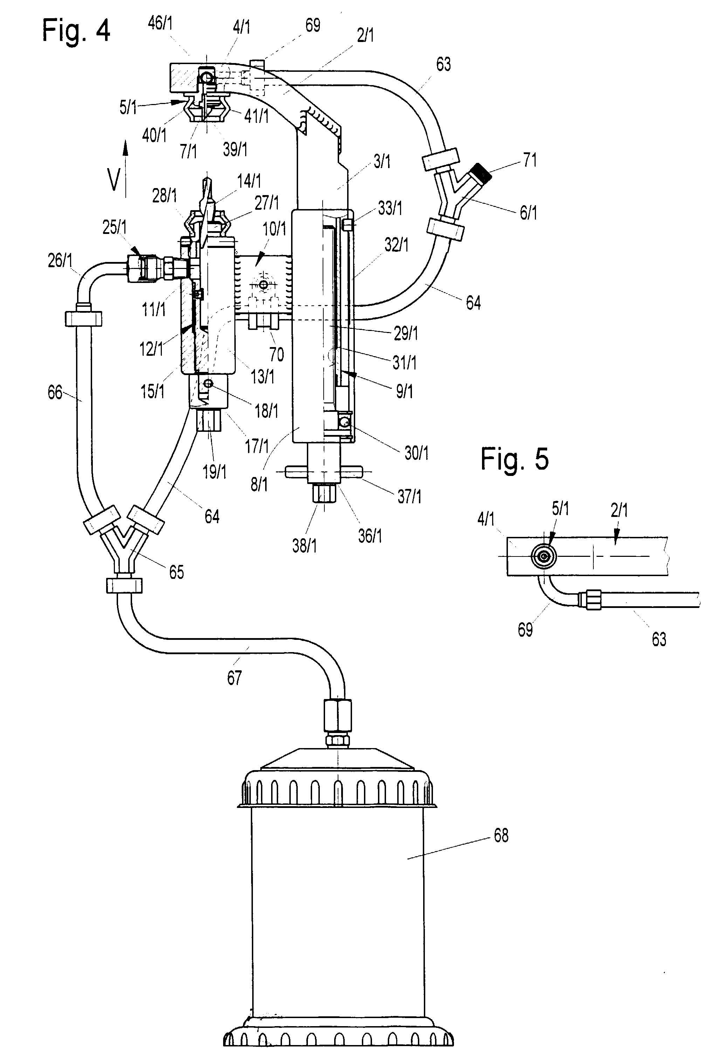

In den Fig. 4 und 5 ist ein zweites Ausführungsbeispiel 1/1 einer erfindungsgemäßen Vorrichtung zum Entleeren von geschlossenen Behältern, insbesondere Kraftstoffiltern dargestellt. Die Vorrichtung 1/1 ist im wesentlichen identisch aufgebaut wie die Vorrichtung 1 aus den Fig. 1 bis 3 und weist ebenfalls einen oberen Gabelarm 2/1 auf, an dessen freien Ende 4/1 eine Belüftungseinrichtung 5/1 vorgesehen ist. Der obere Gabelarm 2/1 ist am oberen Ende eines Teleskoprohres 3/1 festsitzend angeordnet. Die Belüftungseinrichtung 5/1 weist ebenfalls einen Stechdorn 7/1 auf, welcher in einem Rohrstutzen 40/1 angeordnet ist. Auf diesem Rohrstutzen 40/1 ist eine Schlauchdichtung 41/1 vorgesehen, deren Länge etwa der Länge des Stechdornes 7/1 entspricht. Der Stechdorn 7/1 ist identisch aufgebaut wie der Stechdorn 7, wie dies beispielsweise aus Fig. 2 ersichtlich ist, wobei die Radialbohrung (57) aus Fig. 2 in Fig. 4 und 5 aus Übersichtlichkeitsgründen nicht dargestellt ist.

Das Teleskoprohr 3/1 ist in einem Führungsrohr 8/1 axial verschiebbar geführt, wobei zur unverdrehbaren Lagerung des Teleskoprohres 3/1 im Führungsrohr 8/1 ein Kerbstift 33/1 vorgesehen ist, welcher im Führungsrohr 8/1 festsitzend angeordnet ist und radial nach innen in eine Führungsnut 32/1 des Teleskoprohres 3/1 hineinragt. Das Teleskoprohr 3/1 weist im Bereich seines unteren Endes ein Mutterngewinde 31/1 auf, welches zusammen mit einer Gewindespindel 29/1 einen Spindeltrieb 9/1 bildet. Die Gewindespindel 29/1 ist über ein Axialdrucklager 30/1 im Führungsrohr 8/1 axial unverschiebbar drehbar gelagert. Desweiteren weist die Gewindespindel 29/1 an ihrem unteren Ende einen Spindelkopf 36/1 auf, welcher das Führungsrohr 8/1 nach unten hin axial überragt und einen Betätigungshebel 37/1 sowie einen Antriebssechskant 38/1 aufweist.

Etwa im oberen Drittel des Führungsrohres 8/1 ist ein unterer Gabelarm 10/1 vorgesehen, an dessen freiem Ende eine Bohrvorrichtung 12/1 angeordnet ist. Diese Bohrvorrichtung 12/1 entspricht der Bohrvorrichtung aus den Fig. 1 und 3 und ist in seiner Funktion identisch ausgebildet wie die Bohrvorrichtung 12. So weist die Bohrvorrichtung 12/1 ein Ablaßrohr 13/1, einen Spiralbohrer 14/1 sowie eine Bohrspindel 15/1 auf. Die Bohrspindel 15/1 ist an ihrem unteren Ende mit einem Schlüsselkopf 17/1 versehen, welcher mittels eines Kerbstiftes 18/1 unverdrehbar auf der Bohrspindel 15/1 gelagert ist. Der Schlüsselkopf 17/1 weist an seinem unteren Ende einen Sechskant 19/1 auf, über welchen die Bohrspindel 15 mittels eines entsprechenden Schlüsselwerkzeuges drehend betätigbar ist. Am oberen Ende des Ablaßrohres 13/1 ist ein Rohrstutzen 27/1 mit einer Schlauchdichtung 28/1 vorgesehen. Das Ablaßrohr 13/1 bildet einen Ablaßkanal 11/1, welcher dem Ablaßkanal 11 aus Fig. 3 entspricht. Dieser Ablaßkanal 11/1 ist über einen Ablaßstutzen 25/1 mit einem Anschlußrohrstutzen 26/1 verbunden.

Der Anschlußrohrstutzen 26/1 ist über ein Ablaßrohr 66, ein Verbindungs-T-Stück 65 und ein Ablaufrohr 67 mit einem Flüssigkeitsauffangbehälter 68 verbunden. Somit kann nach dem Anbohren eines Flüssigkeitsbehälters insbesondere eines Kraftstoffiltergehäuses durch den Spiralbohrer 14/1 in der bereits zum ersten Ausführungsbeispiel gemäß der Fig. 1 bis 3 beschriebenen Weise Kraftstoff aus dem Kraftstoffiltergehäuse über den Ablaßstutzen 25/1, den Anschlußrohrstutzen 26/1, das Ablaßrohr 66, das Verbindungs-T-Stück 65 und das Ablaufrohr 67 in den Flüssigkeitsauffangbehälter 68 gelangen.

Dieses zweite Ausführungsbeispiel der erfindungsgemäßen Vorrichtung 1/1 unterscheidet sich im wesentlichen vom ersten Ausführungsbeispiel gemäß der Fig. 1 bis 3 durch die Ausgestaltung der Belüftungseinrichtung 5/1. Durch den Stechdorn 7/1 führt ein entsprechender Belüftungskanal 39/1 durch den Rohrstutzen 40/1 hindurch in einen Belüftungsraum 46/1. Dieser Belüftungsraum 46/1 ist mit einem außenseitig am Ende 4/1 des oberen Gabelarmes 2/1 angeschlossenen Anschlußrohrstutzen 69 mit einer Rohrleitung 63 verbunden. Diese Rohrleitung 63 führt vom Anschlußrohrstutzen 69 zu einem Belüftungsventil 6/1, welches seinerseits über eine weitere Rohrleitung 64 mit dem Verbindungs-T-Stück 65 in Verbindung steht.

Durch die entsprechende Ausgestaltung der Schlauchdichtung 41/1 des Rohrstutzens 40/1 sowie eine entsprechend darauf abgestimmte Länge des Stechdornes 7/1 kann der Stechdorn 7/1 schon vor dem Anbohren eines Kraftstoffiltergehäuses durch den Spiralbohrer 14/1 zum Anbringen einer Belüftungsöffnung in den Kraftstoffilterbehälter eindringen. Mit dem Eindringen des Stechdornes 7/1 wird in das Kraftstoffiltergehäuse ein Durchbruch bzw. die Belüftungsöffnung erzeugt, so daß über die Belüftungsbohrungen 30/1 des Stechdornes 7/1, den Belüftungsraum 46/1, den Anschlußrohrstutzen 69 sowie die Rohrleitung 63, das Belüftungsventil 6/1 und die Rohrleitung 64 zum Verbindungs-T-Stück 65 gelangen. Dadurch wird gleichzeitig der Überdruck im Kraftstoffiltergehäuse abgebaut und auch während dieses Druckabbaues Kraftstoff durch den Anschlußrohrstutzen 69, die Rohrleitung 63, das Belüftungsventil 6/1 sowie die Rohrleitung 64 zum Verbindungs-T-Stück 65 abgeführt. Vom Verbindungs-T-Stück 65 gelangt dieser Kraftstoff über das Ablaufrohr 67 in den Flüssigkeitsauffangbehälter 68.

Nach dem Druckabbau im Kraftstoffiltergehäuse kann dieses anschließend durch die Bohrvorrichtung 12/1 angebohrt werden, so daß Kraftstoff durch die dadurch erzeugte Ablaufbohrung im Kraftstoffiltergehäuse über den Ablaßstutzen 25, den Anschlußrohrstutzen 26, das Ablaßrohr 66, das Verbindungs-T-Stück 65 und das Ablaufrohr 67 in den Flüssigkeitsauffangbehälter 68 gelangen kann.

Durch dieses Ablaufen des Kraftstoffes aus dem Kraftstoffiltergehäuse wird in diesem ein Unterdruck hervorgerufen, so daß es nach geraumer Zeit notwendig ist, das Kraftstoffiltergehäuse zu belüften. Hierfür ist das Belüftungsventil 6/1 vorgesehen, welches eine Belüftungsschraube 71 aufweist, welche zum Belüften des Kraftstoffilterbehälters nun geöffnet wird. Somit gelangt über diese Belüftungsschraube 71 des Belüftungsventiles 6/1, die Rohrleitung 63 und den Anschlußrohrstutzen 69 Belüftungsluft über den Belüftungsraum 46/1 und die Belüftungsbohrung 39/1 des Stechdornes 7/1 in den Kraftstoffilterbehälter, so daß der sich darin ausgebildete Unterdruck abgebaut wird und der Kraftstoffilter vollständig entleerbar ist.

Mit der erfindungsgemäßen Vorrichtung zum Entleeren von Behältern, insbesondere von Kraftstoffiltern, wird eine Vorrichtung zur Verfügung gestellt, mittels welcher es sicher möglich ist, einen Kraftstoffilter vollständig zu entleeren, wobei die dafür notwendige Belüftungsbohrung in die Wandung des Kraftstoffilters ohne zusätzliches Belüftungsgerät in Form einer Stechzange oder dergleichen vor order nach dem Anbringen einer Ablaufbohrung am Kraftstoffilters anbringbar ist.

## Patentansprüche

1. Vorrichtung (1, 1/1) zum Entleeren von geschlossenen unter Druck stehenden Behältern (53), insbesondere von Kraftstoffiltern, welche am Behälter (53) festsitzend und abnehmbar befestigbar ist und die einen Ablaßkanal (11, 11/1) mit einer Ablaßöffnung aufweist, in welchem eine Bohrvorrichtung (12, 12/1) zum Durchbohren der Behälterwand (54) angeordnet ist, welche mittels eines Spindeltriebes (15, 15/1) betätigbar ist, wobei der Ablaßkanal (11, 11/1) an der Behälterwand (54) zumindest während des Entleerens dichtend zur Anlage bringbar ist,
**dadurch gekennzeichnet,**
daß der Ablaßkanal (11, 11/1) mit seiner Bohrvorrichtung (12, 12/1) am Ende eines ersten Gabelarmes (10, 10/1) angeordnet ist, welcher an einem Führungsrohr (8, 8/1) befestigt ist, in welchem ein Teleskoprohr (3, 3/1) axial verschiebbar geführt ist,
daß am Ende des Teleskoprohres (3, 3/1) ein zweiter Gabelarm (2, 2/1) vorgesehen ist, welcher mit dem ersten Gabelarm (10, 10/1), dem Teleskoprohr (3, 3/1) und dem Führungsrohr (8, 8/1) in einer gemeinsamen Ebene liegt und an dessen Ende eine Belüftungsvorrichtung (5, 5/1) mit einem Stechdorn (7, 7/1) vorgesehen ist, und
daß der Stechdorn (7, 7/1) durch Verringern des Abstandes des ersten Gabelarmes (10, 10/1) zum zweiten Gabelarm (2, 2/1) die Wandung des zwischen dem Stechdorn (7, 7/1) und der Bohrvorrichtung (12, 12/1) bzw. dem Ablaßkanal (11, 11/1) klemmend gehaltenen Behälters (53) durchstößt.

2. Vorrichtung (1, 1/1) nach Anspruch 1, dadurch gekennzeichnet, daß die Bohrvorrichtung (12, 12/1) aus einem im Ablaßkanal (11, 11/1) koaxial verlaufend angeordneten Spiralbohrer (14, 14/1) gebildet ist, welcher mittels einer im Ablaßkanal ein- und ausdrehbaren Bohrspindel (15, 15/1) zum Durchbohren der Wandung (54) des am Ablaßkanal (11, 11/1) sitzenden Behälters (53) drehend axial gegen die Wandung (54) und bohrend durch diese hindurch bewegbar ist.

3. Vorrichtung (1, 1/1) nach Anspruch 1 oder 2, dadurch gekennzeichnet, daß der Abstand zwischen dem ersten Gabelarm (10, 10/1) mit dessen Bohrvorrichtung (12, 12/1) und dem zweiten Gabelarm (2, 2/1) mit dessen Belüftungsvorrichtung (5, 5/1) auf unterschiedliche Durchmesser eines zu entleerenden Behälters (53) einstellbar ist, indem das Teleskoprohr (3, 3/1) mittels eines Spindeltriebes (9, 9/1) im Führungsrohr (8, 8/1) axial verstellbar ist.

4. Vorrichtung (1) nach einem der Ansprüche 1 bis 3, dadurch gekennzeichnet, daß der Stechdorn (7) rohrartig ausgebildet ist und eine koaxiale verlaufende Belüftungsbohrung (39) aufweist, die mit einem Tastventil (47) verbunden ist, durch dessen Betätigung dem durch die Wandung (54) des zu entleerenden Behälters (53) hindurchgestochenen Stechdorn (7) bzw. dessen Belüftungsbohrung (39) Umgebungsluft zum Belüften des Behälters (53) zuführbar ist.

5. Vorrichtung (1, 1/1) nach einem der Ansprüche 1 bis 4, dadurch gekennzeichnet, daß der Steckdorn (7) in seiner Rohrwandung eine Radialbohrung (57) aufweist, welche bei durch die Wandung (54) des Behälters (53) hindurchgestochenem Stechdorn (7) innerhalb des Behälters (53) liegt und zum Belüften des Behälters (53) mit der Belüftungsbohrung (39) des Stechdornes (7) verbunden ist.

6. Vorrichtung (1, 1/1) nach einem der Ansprüche 1 bis 5, dadurch gekennzeichnet, daß der Ablaßkanal (11, 11/1) behälterseitig einen Rohrstutzen (40, 40/1) aufweist, auf welchem eine Schlauchdichtung (28, 28/1) angeordnet ist, mittels welcher der Ablaßkanal (11, 11/1) dichtend am Behälter (53) anordenbar ist.

7. Vorrichtung (1, 1/1) nach einem der Ansprüche 1 bis 6, dadurch gekennzeichnet, daß der Stechdorn (7, 7/1) in einen Rohrstutzen (40, 40/1) eingepreßt ist, welcher in einen Belüftungsraum (46, 46/1) des zweiten Gabelarmes (2, 2/1) mündet, der mit dem Belüftungsventil (5, 5/1) zur Belüftung des Behälters (53) in Verbindung steht, und
daß der Rohrstutzen (40, 40/1) mit einer den Stechdorn (7, 7/1) im Abstand umhüllenden Schlauchdichtung (41, 41/1) versehen ist, mittels welcher der Stechdorn (7, 7/1) dichtend am Behälter (53) anordenbar ist.

8. Vorrichtung (1, 1/1) nach einem der Ansprüche 1 bis 7, dadurch gekennzeichnet, daß der Ablaßkanal (11, 11/1) mit einem Ablaßstutzen (25, 26, 25/1, 26/1) für eine Schlauchleitung (66) versehen ist, über welchen der Ablaßkanal (11, 11/1) mit einem Flüssigkeitsauffangbehälter (68) verbindbar ist.

9. Vorrichtung (1) nach einem der Ansprüche 1 bis 8, dadurch gekennzeichnet, daß die Bohrspindel (15) einen Führungsbund (20) mit einer O-Ringdichtung (21) aufweist, mittels welchem die Bohrspindel (15) drehbar und axial verstellbar, dicht im Ablaßkanal (11) geführt ist.

10. Vorrichtung (1/1) nach einem der Ansprüche 1 bis 3 und 5 bis 9, dadurch gekennzeichnet, daß die Belüftungsvorrichtung (5/1) über eine flexible Rohrleitung (63, 64) mit der Schlauchleitung (66) des Ablaßkanals oder mit dem Flüssigkeitsauffangbehälter (68) verbunden ist, und
daß das Belüftungsventil (5/1) in der flexiblen Rohrleitung (63, 64) integriert angeordnet ist.

## Claims

1. Device (1, 1/1) for emptying closed, pressurised containers (53), in particular fuel filters, which can be attached to the container (53) with a tight fit and so that it is removable and which comprises a discharge channel (11, 11/1) with a discharge opening, in which a drilling device (12, 12/1) for penetrating the container wall (54) is located, which device can be actuated by means of a spindle drive (15, 15/1), the discharge channel (11, 11/1) being able to be brought to bear in a sealing manner against the container wall (54) at least during emptying, characterised in that the discharge channel (11, 11/1) with its drilling device (12, 12/1) is located at the end of a first fork arm (10, 10/1), which is attached to a guide tube (8, 8/1), in which a telescopic tube (3, 3/1) is guided to slide axially, that provided at the end of the telescopic tube (3, 3/1) is a second fork arm (2, 2/1), which lies in a common plane with the first fork arm (10, 10/1), the telescopic tube (3, 3/1) and the guide tube (8, 8/1) and provided at its end is a ventilating device (5, 5/1) with a piercing mandrel (7, 7/1), and that by reducing the distance of the first fork arm (10, 10/1) from the second fork arm (2, 2/1), the piercing mandrel (7, 7/1) penetrates the wall of the container (53) held clamped between the piercing mandrel (7, 7/1) and the drilling device (12, 12/1) or the discharge channel (11, 11/1).

2. Device (1, 1/1) according to Claim 1, characterised in that the drilling device (12, 12/1) is formed from a twist drill (14, 14/1) arranged to extend coaxially in the discharge channel (11, 11/1), which drill is able to move by means of a drill spindle (15, 15/1) able to be rotated into and out of the discharge channel, for penetrating the wall (54) of the container (53) seated on the discharge channel (11, 11/1), rotating axially against the wall (54) and drilling through the latter.

3. Device (1, 1/1) according to Claim 1 or 2, characterised in that the distance between the first fork arm (10, 10/1) with its drilling device (12, 12/1) and the second fork arm (2, 2/1) with its ventilating device (5, 5/1) is adjustable to different diameters of a container (53) to be emptied, in that the telescopic tube (3, 3/1) is axially adjustable by means of a spindle drive (9, 9/1) in the guide tube (8, 8/1).

4. Device (1) according to one of Claims 1 to 3, characterised in that the piercing mandrel (7) is constructed in the form of a tube and comprises a coaxially extending ventilating bore (39), which is connected to a contact valve (47), due to the actuation of which atmospheric air for ventilating the container (53) can be supplied to the piercing mandrel (7) penetrating the wall (54) of the container (53) to be emptied or its ventilating bore (39).

5. Device (1, 1/1) according to one of Claims 1 to 4, characterised in that the piercing mandrel (7) comprises in its tubular wall a radial bore (57), which when the piercing mandrel (7) has penetrated the wall (54) of the container (53), lies within the container (53) and for ventilating the container (53) is connected to the ventilating bore (39) of the piercing mandrel (7).

6. Device (1, 1/1) according to one of Claims 1 to 5, characterised in that the discharge channel (11, 11/1) comprises adjacent the container a socket (40, 40/1), on which a hose gasket (28, 28/1) is located, by means of which the discharge channel (11, 11/1) can be located in a sealing manner against the container (53).

7. Device (1, 1/1) according to one of Claims 1 to 6, characterised in that the piercing mandrel (7, 7/1) is pressed into a socket (40, 40/1), which opens into a ventilation chamber (46, 46/1) of the second fork arm (2, 2/1), which is connected to the ventilating valve (5, 5/1) for ventilating the container (53) and that the socket (40, 40/1) is provided with a hose gasket (41, 41/1) enclosing the piercing mandrel (7, 7/1) at a distance, by means of which gasket the piercing mandrel (7, 7/1) can be located in a sealed manner against the container (53).

8. Device (1, 1/1) according to one of Claims 1 to 7, characterised in that the discharge channel (11, 11/1) is provided with a discharge socket (25, 26, 25/1, 26/1) for a hose line (66), by which the discharge channel (11, 11/1) can be connected to a liquid-collecting container (68).

9. Device (1) according to one of Claims 1 to 8, characterised in that the drilling spindle (15) comprises a guide collar (20) with an O-ring gasket (21), by means of which the drilling spindle (15) is guided so that it is able to rotate and is axially adjustable, hermetically in the discharge channel (11).

10. Device (1/1) according to one of Claims 1 to 3 and 5 to 9, characterised in that the ventilating device (5/1) is connected by way of a flexible conduit (63, 64) to the hose line (66) of the discharge channel or to the liquid-collecting container (68), and that the ventilating valve (5/1) is integrated in the flexible conduit (63, 64).

## Revendications

1. Dispositif (1, 1/1) pour vider des conteneurs fermés (53) sous pression, en particulier des filtres à carburant, qui peut être fixé au conteneur (53) avec assise ferme et de manière amovible, et comporte un canal d'écoulement (11, 11/1) muni d'un orifice d'écoulement, et dans lequel se trouve un dispositif perforateur (12, 12/1) qui est destiné à perforer la paroi (54) du conteneur et est actionnable au moyen d'un entraînement par broche (15, 15/1), le canal d'écoulement (11, 11/1) pouvant être appliqué de manière étanche contre la paroi (54) du conteneur, au moins pendant le vidage,
caractérisé par le fait
que le canal d'écoulement (11, 11/1) est placé, avec son dispositif perforateur (12, 12/1), à l'extrémité d'un premier bras de fourche (10, 10/1) fixé à un tube de guidage (8, 8/1) dans lequel un tube télescopique (3, 3/1) est guidé à coulissement axial ;
qu'il est prévu, à l'extrémité du tube télescopique (3, 3/1), un second bras de fourche (2, 2/1) qui est situé dans un plan commun avec le premier bras de fourche (10, 10/1), le tube télescopique (3, 3/1) et le tube de guidage (8, 8/1), et à l'extrémité duquel est prévu un dispositif de ventilation (5, 5/1) doté d'un pointeau (7, 7/1) ; et
que, par suite d'une diminution de la distance séparant le premier bras de fourche (10, 10/1) du second bras de fourche (2, 2/1), le pointeau (7, 7/1) perfore la paroi du conteneur (53) respectivement retenu, avec effet de coincement, entre le pointeau (7, 7/1) et le dispositif perforateur (12, 12/1) ou le canal d'écoulement (11, 11/1).

2. Dispositif (1, 1/1) selon la revendication 1, caractérisé par le fait que le dispositif perforateur (12, 12/1) est formé par un foret hélicoïdal (14, 14/1) qui est logé coaxialement dans le canal d'écoulement (11, 11/1) et qui, au moyen d'une broche de perçage (15, 15/1) pouvant être vissée dans ledit canal d'écoulement et en être dévissée, peut être animé d'un mouvement axial rotatoire contre la paroi (54), en traversant cette dernière avec effet de perforation, afin de perforer ladite paroi (54) du conteneur (53) reposant contre le canal d'écoulement (11, 11/1).

3. Dispositif (1, 1/1) selon la revendication 1 ou 2, caractérisé par le fait que la distance, entre le premier bras de fourche (10, 10/1) associé à son dispositif perforateur (12, 12/1), et le second bras de fourche (2, 2/1) associé à son dispositif de ventilation (5, 5/1), peut être réglée sur différents diamètres d'un conteneur (53) devant être vidé, suite à la faculté de déplacement axial du tube télescopique (3, 3/1) dans le tube de guidage (8, 8/1), au moyen d'un entraînement par broche (9, 9/1).

4. Dispositif (1) selon l'une des revendications 1 à 3, caractérisé par le fait que le pointeau (7) est de réalisation tubulaire, et présente un perçage d'aération (39) s'étendant coaxialement et relié à une soupape (47) à poussoir par l'actionnement de laquelle de l'air ambiant peut être respectivement délivré audit pointeau (7) enfoncé à travers la paroi (54) du conteneur (53) à vider, ou au perçage d'aération (39) dudit pointeau, en vue de la ventilation dudit conteneur (53).

5. Dispositif (1, 1/1) selon l'une des revendications 1 à 4, caractérisé par le fait que le pointeau (7) présente, dans sa paroi tubulaire, un perçage radial (57) qui se trouve à l'intérieur du conteneur (53) lorsque le pointeau (7) est enfoncé à travers la paroi (54) dudit conteneur (53), et est relié au perçage d'aération (39) dudit pointeau (7) pour ventiler ledit conteneur (53).

6. Dispositif (1, 1/1) selon l'une des revendications 1 à 5, caractérisé par le fait que le canal d'écoulement (11, 11/1) comporte, côté conteneur, un raccord tubulaire (40, 40/1) sur lequel est placée une garniture souple d'étanchement (28, 28/1) au moyen de laquelle ledit canal d'écoulement (11, 11/1) peut être installé sur le conteneur (53), de manière étanche.

7. Dispositif (1, 1/1) selon l'une des revendications 1 à 6, caractérisé par le fait que le pointeau (7, 7/1) est emmanché à force dans un raccord tubulaire (40, 40/1) débouchant dans une chambre de ventilation (46, 46/1) du second bras de fourche (2, 2/1), en communication avec la soupape de ventilation (5, 5/1), afin de ventiler le conteneur (53) ; et
que le raccord tubulaire (40, 40/1) est muni d'une garniture souple d'étanchement (41, 41/1) qui entoure le pointeau (7, 7/1) à distance, et au moyen de laquelle ledit pointeau (7, 7/1) peut être installé sur le conteneur (53), de manière étanche.

8. Dispositif (1, 1/1) selon l'une des revendications 1 à 7, caractérisé par le fait que le canal d'écoulement (11, 11/1) est pourvu d'un raccord d'évacuation (25, 26, 25/1, 26/1) qui est affecté à un conduit souple (66), et par l'intermédiaire duquel ledit canal d'écoulement (11, 11/1) peut être raccordé à un réceptacle (68) collecteur de liquide.

9. Dispositif (1) selon l'une des revendications 1 à 8, caractérisé par le fait que la broche de perçage (15) présente un collet de guidage (20) muni d'un joint torique d'étanchement (21), et au moyen duquel ladite broche de perçage (15) est guidée de manière étanche dans le canal d'écoulement (11), avec faculté de mouvement axial rotatoire.

10. Dispositif (1/1) selon l'une des revendications 1 à 3 et 5 à 9, caractérisé par le fait que le dispositif de ventilation (5/1) est relié, par l'intermédiaire d'un conduit tubulaire flexible (63, 64), au conduit souple (66) du canal d'écoulement ou au réceptacle (68) collecteur de liquide ; et
que la soupape de ventilation (5/1) est intégrée dans ledit conduit tubulaire flexible (63, 64).
